(19) Europäisches Patentamt / European Patent Office / Office européen des brevets

(11) **EP 3 734 729 A1**

(12) **EUROPEAN PATENT APPLICATION**
published in accordance with Art. 153(4) EPC

(43) Date of publication:
**04.11.2020 Bulletin 2020/45**

(51) Int Cl.:
*H01M 4/86* (2006.01)          *H01M 4/96* (2006.01)
*H01M 8/18* (2006.01)

(21) Application number: **18896520.6**

(22) Date of filing: **14.12.2018**

(86) International application number:
**PCT/JP2018/046204**

(87) International publication number:
**WO 2019/131232 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 JP 2017250088**

(71) Applicant: **Showa Denko K.K.**
**Tokyo 105-8518 (JP)**

(72) Inventors:
• **HOSHINA Takaharu**
**Tokyo 105-8518 (JP)**
• **TOMITA Miyuki**
**Tokyo 105-8518 (JP)**

(74) Representative: **Strehl Schübel-Hopf & Partner**
**Maximilianstrasse 54**
**80538 München (DE)**

(54) **ELECTRODE FOR REDOX FLOW BATTERY, AND REDOX FLOW BATTERY**

(57)    The present invention provides an electrode with which it is possible to improve battery characteristics, and a redox flow battery in which the electrode is used. This redox flow battery is provided with a liquid inflow layer 1 into which an electrolytic solution flows, a liquid outflow layer 3 from which the electrolytic solution flows out, and a main electrode layer 2 disposed between the liquid inflow layer 1 and the liquid outflow layer 3. The liquid outflow layer 3 has a thickness less than that of the liquid inflow layer 1.

FIG. 1

**Description**

TECHNICAL FIELD

The present invention relates to an electrode of a redox flow battery and the redox flow battery.

BACKGROUND ART

Redox flow battery is known as a large-capacity storage battery. Redox flow battery generally comprises an ion exchange membrane separating electrolytes and electrodes disposed adjacent to both sides of the ion exchange membrane. Charging and discharging can be performed by simultaneously allowing an oxidation reaction on one electrode and a reduction reaction on the other electrode to proceed by using electrolytes, each of which contains an active material, i.e., metallic ions whose valence is changed by oxidation and reduction.

Incidentally, it is common to determine whether or not to install stationary storage batteries after considering cost and safety. The cost of a redox flow battery is essentially determined by current density. It is the cell resistivity that determines the current density that can flow.

Further, the Applicant has proposed, in Patent Document 1, an electrode material comprising: a conductive sheet (main electrode layer) containing carbon nanotubes, a liquid inflow member that is formed on a first surface of the conductive sheet and through which an electrolyte to be passed through the conductive sheet flows into the conductive sheet; and a liquid outflow member that is formed on a second surface of the conductive sheet and through which the electrolyte solution that has passed through the conductive sheet flows. This electrode material has improved permeability of an electrolyte due to a larger Darcy's law permeability in the plane direction of the liquid outflow member and the liquid inflow member compared to the Darcy's law permeability in the normal direction of the conductive sheet, thereby enhancing the properties of the redox flow battery.

Patent Document 1: PCT International Publication No. WO2016/159348

DISCLOSURE OF THE INVENTION

Problems to be Solved by the Invention

However, in view of the demand for further cost improvement, there was room for further improvement in battery characteristics such as cell resistivity compared to Patent Document 1.

It is an object of the present invention to further improve the cell resistivity by improving the electrode structure of Patent Document 1.

Means for Solving the Problems

The present inventors have found that rendering thickness of the liquid outflow layer smaller than that of the liquid inflow layer in the electrode comprising a main electrode layer between the liquid inflow layer and the liquid outflow layer achieves improvement in reaction efficiency at electrodes, and this results in reduced cell resistivity, and thereby the present inventors have completed the present invention.

That is, the gist and constitution of the present invention is as follows. A first aspect of the present invention is an electrode of a redox flow battery, with the electrode comprising a liquid inflow layer into which an electrolyte flows; a liquid outflow layer from which the electrolyte flows; and a main electrode layer disposed between the liquid inflow layer and the liquid outflow layer, in which the thickness of the liquid outflow layer is smaller than the thickness of the liquid inflow layer. A second aspect of the present invention is the electrode of redox flow battery as described in the first aspect, in which the electrode is configured such that the electrolyte passes through the main electrode layer in a thickness direction from a plane on the side of the liquid inflow layer to a plane on the side of the liquid outflow layer. A third aspect of the present invention is the electrode of a redox flow battery as described in the first or second aspect, in which Darcy's law permeability in a plane direction of the liquid inflow layer is larger than the Darcy's law permeability in the thickness direction of the main electrode layer. A fourth aspect of the present invention is the electrode of a redox flow battery as described in the first, second or third aspect, in which the main electrode layer is made of a conductive sheet including carbon nanotubes having an average fiber diameter of 1,000 nm or less. A fifth aspect of the present invention is the electrode of a redox flow battery as described in any one of the first to fourth aspects, in which the liquid inflow layer has a conductivity.

A sixth aspect of the present invention is the electrode of a redox flow battery as described in any one of the first to fifth aspects, in which the thickness of the liquid inflow layer is 0.25 mm or more and 0.60 mm or less. A seventh aspect of the present invention is the electrode of a redox flow battery as described in any one of the first to sixth aspects, in which the thickness of the liquid outflow layer is 0.10 mm or more and 0.35 mm or less. An eighth aspect of the present invention is the electrode of a redox flow battery as described in any one of the first to seventh aspects, further comprising a rectifying layer between the liquid inflow layer and the main electrode layer, in which Darcy's law permeability in the thickness direction of the rectifying layer is smaller than the Darcy's law permeability in the plane direction of the liquid inflow layer. A ninth aspect of the present invention is a redox flow battery, comprising: an ion exchange membrane; the electrode according to any one of the first to eight aspects; and a current collector plate in this order, in which the electrode is arranged such that the liquid inflow layer is on a side of the current collector plate and the liquid outflow layer is on a side of the ion exchange membrane.

Effects of the Invention

The present invention achieves an excellent effect that battery characteristics can be improved by optimization of the configuration of an electrode.

BRIEF DESCRIPTION OF THE DRAWINGS

FIG. 1 is a cross-sectional view schematically showing the main part of the redox flow battery as described in the first embodiment;
FIG. 2 is a cross-sectional view schematically showing the main part of the redox flow battery as described in the second embodiment; and
FIG. 3 is a cross-sectional view schematically showing the main part of the redox flow battery as described in the third embodiment.

PREFERRED MODE FOR CARRYING OUT THE INVENTION

Below, the electrode of a redox flow battery to which the present invention is applied and the redox flow battery are described. Incidentally, the drawings used in the following explanation may be enlarged to show characteristic parts for convenience to make the features of the invention easier to understand, and the size ratio of each component may be different from the actual one. Further, the material, dimensions, and the like exemplified in the following description are only examples and the present invention is not limited thereto. The present invention can be practiced by changing them as appropriate without changing the gist of the invention.

<First Embodiment>

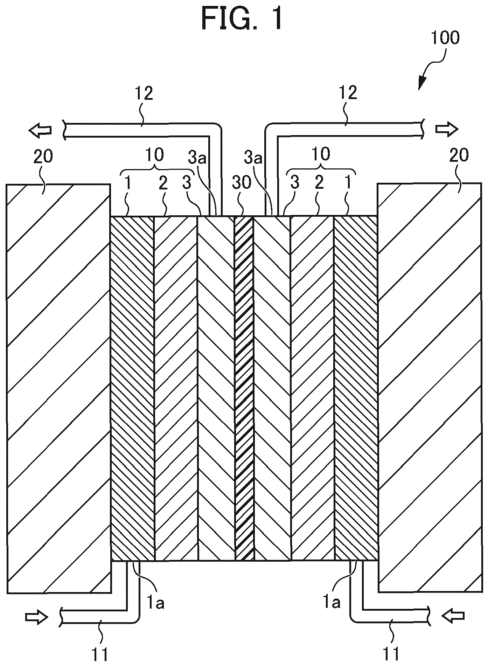

FIG. 1 is a drawing schematically showing a cross-sectional configuration of the main part of the electrode according to the first embodiment of the present invention and the redox flow battery. As shown in FIG. 1, a redox flow battery 100 includes electrodes 10 (positive electrode, negative electrode), a current collector plate 20, and an ion exchange membrane 30. An electrode 10 is provided between the current collector plate 20 and the ion exchange membrane 30. The electrolyte circulates through the cell 100 by flowing from an electrode tank (not shown) through an inflow pipe 11 (e.g., by pumping) into the interior of the electrode 10 and flowing out through the outflow pipe 12 to the exterior of the electrode 10 and is returned to the electrode tank, as is described below.

The electrode 10 comprises a liquid inflow layer 1, a main electrode layer 2, and a liquid outflow layer 3, and the main electrode layer 2 is disposed between the liquid inflow layer 1 and the liquid outflow layer 3. The electrolyte supplied to electrode 10 through the inflow pipe 11 can pass through the main electrode layer 2 in a thickness direction from a plane on the side of the liquid inflow layer 1 to a plane on the side of the liquid outflow layer 3.

In the configuration of FIG. 1, the redox flow battery 100 according to the present embodiment illustrates a single cell having two current collector plates 20 and 20, an ion exchange membrane 30, and a pair of electrodes 10 and 10 each provided between each of the current collector plates 20 and the ion exchange membrane 30, but a redox flow battery including a plurality of cells in which they are connected in series is also an embodiment of the present invention. Further, as another embodiment, the present invention includes a redox flow battery (not shown) comprising a plurality of cells, in which the cells are electrically connected in series, and the connection is made in a current collector plate (also referred to as "bipolar plate") in which a current collector plate closer to the positive electrode and a current collector plate closer to the negative electrode are integrated on the front and back (also referred to as a "stacked cell").

Below, the electrode 10 (liquid inflow layer 1, main electrode layer 2, and liquid outflow layer 3), the current collector plate 20, and the ion-exchange membrane 30 of the redox flow battery 100 are described.

[Electrode]

(Main electrode layer)

The main electrode layer 2 is preferably made of a conductive sheet containing carbon nanotubes with an average fiber diameter of 1,000 nm or less. The average fiber diameter of the carbon nanotubes is preferably from 1 to 300 nm, more preferably from 10 to 200 nm, and most preferably from 15 to 150 nm. The average fiber diameter of the carbon nanotubes was obtained by randomly measuring diameters of 100 fibers for each type of fiber, using a transmission electron microscope and calculating an arithmetic average value. The following average fiber diameter was also determined by the same means.

The carbon nanotubes contained in the main electrode layer 2 may be configured to be a mixture of a plurality of types of carbon nanotubes having different average fiber diameters. In that case, for example, it is preferred to include a first carbon nanotube with an average fiber diameter of 100 to 1,000 nm and a second carbon nanotube with an average fiber diameter of 30 nm or less.

Incidentally, when the carbon nanotubes constituting the main electrode layer 2 are formed by mixing a plurality of types of carbon nanotubes having different average fiber diameters, the average fiber diameter is obtained by observing this main electrode layer 2 by transmission electron microscope, regarding those having a fiber diameter of more than 50 nm as the first carbon nanotube and those having a fiber diameter of less than 50 nm as the second carbon nanotube in the same field of view, and calculating the average fiber diameter as described above.

The average fiber diameter of the first carbon nanotube is preferably from 100 to 300 nm, more preferably from 100 to 200 nm, and most preferably from 100 to 150 nm. The average fiber length is preferably from 0.1 to 30 $\mu$m, more preferably from 0.5 to 25 $\mu$m, and most preferably from 0.5 to 20 $\mu$m.

The average fiber diameter of the second carbon nanotube is preferably from 1 to 30 nm, more preferably from 5 to 25 nm, and most preferably from 5 to 20 nm. The average fiber length is preferably from 0.1 to 10 $\mu$m, more preferably from 0.2 to 8 $\mu$m, most preferably from 0.2 to 5 $\mu$m.

The average fiber diameters of the first carbon nanotube and the second carbon nanotube within the ranges described above result in a structure which can maintain high strength and high conductivity in the main electrode layer 2. This is because the first carbon nanotubes serve as a stem and the second carbon nanotubes are suspended in a branch-like state between a plurality of the first carbon nanotubes. For example, if the average fiber diameter of the first carbon nanotubes is 100 nm or more, the stem becomes stable and cracking is less likely to occur in the structure of electrode, making it easy to maintain sufficient strength. On the other hand, if the average fiber diameter of the second carbon nanotubes is 30 nm or less, the second carbon nanotubes can be sufficiently entangled with the first carbon nanotubes, thereby improving the conductivity. In other words, it is preferable to use an electrode having the main electrode layer 2 containing two types of carbon nanotubes having different average fiber diameters, in that the cell resistivity of the redox flow battery can be reduced.

The content of the second carbon nanotubes is preferably from 0.05 to 30 mass%, more preferably from 0.1 to 20 mass%, and most preferably from 1 to 15 mass%, relative to the total 100 mass% of the first carbon nanotubes and the second carbon nanotubes. The second carbon nanotubes contained in a content within this range enables the main electrode layer 2 to have a structure that can maintain high strength and high conductivity. The reason for this is considered to be in that inclusion of the second carbon nanotubes in this range allows the first carbon nanotubes to function as a main material for conductivity, and further allows the second carbon nanotubes to electrically connect between the respective first carbon nanotubes, resulting in efficient support for conductivity. Further, ratios of the first carbon nanotubes to the second carbon nanotubes in the above ranges facilitate formation of a structure in which at least some of the second carbon nanotubes straddle two or more first carbon nanotubes or a structure in which at least some of the second carbon nanotubes intersect two or more first carbon nanotubes. In addition, a structure in which one second carbon nanotube is entangled with one first carbon nanotube is also easily formed. Entangled structure refers, for example, to a state in which one second carbon nanotube clings to the surface of two or more first carbon nanotubes. The entangled structure is believed to increase contact points between the first carbon nanotubes and the second carbon nanotubes, thus increasing conductive paths. Therefore, as described above, the effect such as a decrease in the cell resistivity can be expected.

The main electrode layer 2 may also include conductive materials other than the carbon nanotubes described above. Examples of the conductive material include conductive polymers, graphite, conductive carbon fibers, and the like. It is preferable to include conductive carbon fibers because of their acid resistance, oxidation resistance, and ease of mixing with carbon nanotubes. The volume resistivity of a carbon fiber is preferably $10^7$ $\Omega$·cm or less, and more preferably $10^3$ $\Omega$·cm or less. The volume resistivity of carbon fiber can be measured by a method described in the Japanese Industrial Standard JIS R7609:2007. In the main electrode layer 2, the ratio of space (porosity) excluding the area occupied by the carbon nanotubes and other conductive materials is preferably set to 70 wt% or more 90 wt% or less. Setting the porosity to the above range enables both the conductivity of the electrode and electrolyte permeability to be satisfied in a well-balanced manner.

When carbon fibers are used as a constituent material for the main electrode layer 2, the average fiber diameter of the carbon fibers is preferably larger than 1 $\mu$m. Use of carbon fibers with a larger average fiber diameter than the carbon nanotubes allows larger voids to be formed in the main electrode layer 2, and this reduces pressure loss generated when an electrolyte is passed through the electrode. Such an average fiber diameter is preferable, because in this case, it is possible not only to reduce pressure loss generated when an electrolyte is passed through the main electrode layer 2, but also to provide a good conductivity. The average fiber diameter of the carbon fibers is preferably from 2 to 100 $\mu$m, and more preferably from 5 to 30 $\mu$m. Average fiber length is preferably from 0.01 to 20 mm, more preferably from 0.05 to 8 mm, and most preferably from 0.1 to 1 mm.

The content of the carbon fibers contained in the main electrode layer 2 is preferably 70 parts by mass or less, and more preferably 50 parts by mass or less, with respect to 100 parts by mass of the carbon nanotubes. These ranges are preferable in that an electrode of a redox flow battery which has a low-pressure loss generated when an electrolyte is passed through the main electrode layer 2 can be obtained.

The main electrode layer 2 may include a water-soluble conductive polymer. The water-soluble conductive polymer is considered to be able to render a surface of a carbon nanotube hydrophilic, and to act as a surfactant when obtaining a dispersion liquid for shaping the main electrode layer 2 to sheet-like form. The water-soluble conductive polymer can uniformly disperse carbon nanotubes in the dispersion, so that a main electrode layer 2 having a uniform porosity can be obtained. As the water-soluble conductive polymer, a conductive polymer having a sulfone group is preferable, and specifically, polyisothianaphthenesulfonic acid can be mentioned.

The addition amount of the water-soluble conductive polymer is preferably 2 parts by mass or less, more preferably 1 part by mass or less, and most preferably 0.5 parts by mass or less with respect to 100 parts by mass of the carbon nanotubes.

The thickness of the main electrode layer 2 is preferably from 0.01 to 1 mm, more preferably from 0.01 to 0.8 mm, and most preferably from 0.02 to 0.5 mm. The thickness of the main electrode layer 2 equal to or greater than 0.01 mm is preferable because the conductivity becomes good. A thickness of the main electrode layer 2 equal to or less than 1 mm is preferable, because a liquid permeability resistance does not become overly large even when carbon nanotubes are contained, and this enables a good liquid permeability to be obtained. Here, the thickness of the main electrode layer 2 is measured by a constant pressure thickness measuring instrument (TECLOCK PG-02) .

Below, a manufacturing process of the main electrode layer 2 is described. The main electrode layer 2 can be molded into a sheet-like shape by preparing a dispersion containing carbon nanotubes in advance, removing a dispersion medium by filtration, or performing coating, spin-casting, spraying, or the like, and then distilling off the dispersion medium. Since a large amount of dispersion liquid is used, it is preferable to use water in consideration of safety and environmental load resistance.

Methods for preparing dispersions containing carbon nanotubes are not particularly limited. For example, a ball mill, a paint shaker, an ultrasonic homogenizer, a jet mill, or the like can be used. Particularly, the wet jet mill is preferred because carbon nanotubes can be uniformly dispersed while suppressing damage to the carbon nanotubes. In this case, before dispersing by wet jet mill, it may be subjected to preliminary mixing using a wet disperser or the like.

Incidentally, the main electrode layer 2 containing a plurality of types of carbon nanotubes and/or carbon fibers having different average fiber diameters can be prepared by adding the plurality of types of carbon nanotubes and/or carbon fibers having different average fiber diameters to a dispersion medium and preparing a dispersion as described above, followed by molding.

When preparing a dispersion containing carbon nanotubes, addition of a dispersant facilitates uniform mixing of the carbon nanotubes. Although a known dispersant may be used, a water-soluble conductive polymer exhibits extremely excellent properties as a dispersant for carbon nanotubes. In addition, since carbon fibers are simple and convenient, it is preferable to disperse them in a dispersion of carbon nanotubes by ultrasonic treatment.

(Liquid inflow layer)

The liquid inflow layer 1 is a layer provided to allow an electrolyte fed from an inlet 1a through an inflow pipe 11 to flow into the main electrode layer 2. Moreover, Darcy's law permeability in the plane direction in this liquid inflow layer 1 is larger than that in the thickness direction of the main electrode layer 2, and thus an electrolyte more easily flows in the liquid inflow layer 1 than in the main electrode layer 2. Additionally, the liquid inflow layer 1 is preferably electrically conductive in order to achieve smooth transfer of electrons between the main electrode layer 2 and the current collector plate 20 in the charging and discharging process. The liquid inflow layer 1 is a part of the configuration of the electrode 10, but the redox reaction of the electrolyte occurs mainly in the main electrode layer 2, and the redox reaction does not need to take place in the liquid inflow layer 1. Here, the plane direction of the liquid inflow layer 1 refers to a direction along a plane perpendicular to the thickness direction of the liquid inflow layer 1.

Permeability in the plane direction of the liquid inflow layer 1 is preferably, for example, 10 times or more, more preferably 50 times or more, and most preferably 100 times or more, compared to the permeability in the thickness direction of the main electrode layer 2.

Here, the Darcy's law permeability $\kappa$ (m$^2$) can be calculated from a cross-sectional area S (m$^2$) of a member through which an electrolyte having viscosity $\mu$ (Pa·sec) permeates, a length L (m) of the member, and a differential pressure $\Delta$P(Pa) between the liquid inflow side and the liquid outflow side of the member when the liquid passes therethrough in a flow rate of Q (m$^3$/sec) by using a relationship of a liquid permeation flux (m/sec) expressed by the following equation (1):

[Equation 1]

$$\frac{Q}{S} = \frac{k}{\mu} \times \frac{\Delta P}{L} \quad \cdots (1)$$

Incidentally, the Darcy' law permeability in the thickness direction of the main electrode layer 2 (hereinafter, sometimes simply referred to as "permeability") refers to permeability in the thickness direction of the main electrode layer 2 (the normal direction to the sheet plane). The Darcy's law permeability in the plane direction of the liquid inflow layer 1 (hereinafter, sometimes simply referred to as "permeability of the liquid inflow layer 1") refers to permeability in the plane direction parallel to the sheet plane of the main electrode layer 2. Similarly, the Darcy's law permeability in the plane direction of the liquid outflow layer 3, which is to be described below, (hereinafter, sometimes simply referred to as "permeability of the liquid outflow layer 3") refers to permeability in the plane direction parallel to the sheet plane of the main electrode layer 2. Note that the (sheet) plane of the main electrode layer 2 is not strictly a (sheet) plane because it actually has a large number of voids, but in the present invention, the entire main electrode layer 2 is considered to be a sheet, and at this time, a plane-like part of the main electrode layer 2 corresponding to the main plate (surface) of the sheet is called a sheet plane.

If the permeability of the liquid inflow layer 1 is sufficiently high compared to the permeability of the main electrode layer 2, an electrolyte flowing into the liquid inflow layer 1 spreads over the entire plane of the liquid inflow layer 1 prior to passing through the main electrode layer 2 which has a low permeability, so that pressure is equalized in the liquid inflow layer 1. Thus, the flow of electrolyte through the main electrode layer 2 inevitably results in a uniform flow in the sheet plane oriented more perpendicular to the plane of the main electrode layer 2. In addition, it is possible to render a distance by which an electrolyte passes through the main electrode layer 2 where the electrolyte is the least likely to flow in the electrode 10, equal to the thickness of the main electrode layer 2, i.e., the shortest distance. Furthermore, since the flow of an electrolyte passing through the main electrode layer 2 can be made uniform in the sheet plane, it is possible to simultaneously and efficiently exchange reactive species in the charging and discharging process, and this results in reduced cell resistivity and improved charging and discharging capacity.

As described above, the lower limit of the thickness of the liquid inflow layer 1 is preferably 0.25 mm or more, more preferably 0.35 mm or more, and most preferably 0.40 mm or more from the viewpoint of making an electrolyte flow uniform in the sheet plane in the main electrode layer 2. The thickness of the liquid inflow layer 1 equal to or greater than 0.25 mm is preferable, because the electrolyte can be made to uniformly flow in the sheet plane of the main electrode layer 2, as described above. On the other hand, the upper limit of the thickness of the liquid inflow layer 1 is preferably 0.60 mm or less, and more preferably 0.45 mm or less from the viewpoint of not rendering the thickness of the cell overly thick.

As the liquid inflow layer 1, any layer may be used, provided that the layer has a flow path through which an electrolyte can flow, so that the electrolyte can pass through. Specifically, it is preferable to be porous. The porous material may be a sponge-like member having voids or a member in which fibers are intertwined. For example, woven fabric of relatively long fibers, felt in which fibers are not woven but are interlaced, paper obtained by straining relatively short fibers to form them into a sheet-like shape can be used. When the porous liquid inflow layer 1 is composed of fibers, the fibers preferably comprise fibers having an average fiber diameter greater than 1 $\mu$m. The average fiber diameter greater than 1 $\mu$m ensures the porous liquid inflow layer 1 has sufficient liquid permeability to an electrolyte.

Preferably, the liquid inflow layer 1 is not corroded by an electrolyte. Specifically, the redox flow battery often comprises an acidic solution. Therefore, it is preferable that the liquid inflow layer 1 is acid resistant. Since the liquid inflow layer 1 may be oxidized by reactions, it is preferable to have oxidation resistance. Having acid or oxidation resistance refers to a state in which the liquid inflow layer 1 maintains its shape after use.

The liquid inflow layer 1 is preferably electrically conductive. Here, conductivity means that a volume resistivity is preferably equal to or less than $10^7$ $\Omega$·cm, more preferably equal to or less than $10^3$ $\Omega$·cm. If the liquid inflow layer 1 is electrically conductive, the electrical conductivity in the liquid inflow layer 1 can be enhanced. For example, when the liquid inflow layer 1 is formed of fibers made of conductive materials, fibers made of metals or alloys having acid resistance and oxidation resistance, or carbon fibers can be used.

[Liquid outflow layer]

The liquid outflow layer 3 is a layer provided to allow an electrolyte having passed through the main electrode layer 2 to flow out into the exterior of the electrode 10. The electrolyte that has passed through the liquid outflow layer 3 flows out from an outlet 3a to the outflow pipe 12 and is returned to an electrolyte tank (not shown).

Darcy's law permeability in the plane direction of the liquid outflow layer 3 refers to permeability in the plane direction parallel to the sheet plane of the main electrode layer 2 (hereinafter, sometimes simply referred to as "permeability of the liquid outflow layer 3"). The liquid outflow layer 3, likewise to the liquid inflow layer 1, is preferably formed of a conductive porous material so that the Darcy's law permeability in the plane direction is greater than the Darcy's law permeability in the thickness of the main electrode layer 2. That is, the liquid outflow layer 3 has a configuration in which an electrolyte more easily flows than in the main electrode layer 2. The Darcy's law permeability in the plane direction of the liquid outflow layer 3 is preferably, for example, 50 times or more, and more preferably 100 times or more, compared to the Darcy's law permeability in the thickness direction of the main electrode layer 2.

Sufficiently higher permeability in the liquid outflow layer 3 compared to the permeability of the main electrode layer 2 allows an electrolyte that has passed through the main electrode layer 2 to be quickly discharged to the outflow pipe 12 without retention in the liquid outflow layer 3 side. Absence of electrolyte retention in the liquid outflow layer 3 means that pressure required for the electrolyte to pass through this liquid outflow layer 3 is sufficiently lower than the pressure required for the electrolyte to pass through the main electrode layer 2. That is, when flow of an electrolyte passing through the main electrode layer 2 is oriented in a direction perpendicular to the plane of the main electrode layer 2, the above-mentioned relationship between the permeability of the main electrode layer 2 and that of the liquid outflow layer 3 enables the electrolyte to pass through the liquid outflow layer 3 without disturbing vertical flow in the main electrode layer 2, so as to be discharged into the outflow pipe 12.

In addition, an electrolyte after passing through the main electrode layer 2 has a high content of the electrolyte after undergoing an oxidizing reaction or a reducing reaction. Here, in order for an electrode reaction to efficiently proceed, it is required to make ions (active material) after the reaction in which valence has changed flow out quickly, and to quickly move protons to the opposite electrode through the ion exchange membrane 30. For example, when an electrolyte containing vanadium is used as an active material, $V^{4+}$ changes to $V^{5+}$ at the positive electrode and $V^{3+}$ changes to $V^{2+}$ at the negative electrode during the charging process. Therefore, efficiently removing ions ($V^{5+}$ and $V^{2+}$) after this reaction enables ions ($V^{4+}$ and $V^{3+}$) before reaction to be quickly supplied to the main electrode layer 2, and thereby ions before and after the reaction can be exchanged, and this results in enhancement of reaction efficiency.

Furthermore, it has been clarified that making the thickness of the liquid outflow layer 3 smaller than the thickness of the liquid inflow layer 1 enables electrode reactions to more efficiently proceed in the present invention. Although the reason for this is not clear, it is considered as follows: in the liquid inflow layer 1, enhancing permeability is satisfactory, whereas in the liquid outflow layer 3, in addition to enhancing permeability, protons can be quickly transferred to the ion exchange membrane 30 due to shortened distance from the main electrode layer 2 to the ion exchange membrane 30. That is, it is effective to render the thickness of the liquid outflow layer 3 smaller than the thickness of the liquid inflow layer 1 in order for electrode reactions to efficiently proceed, whereby protons can quickly move to the opposite electrode and ion-exchange is facilitated, so that an increase in the cell resistivity can be suppressed.

The upper limit of the thickness of the liquid outflow layer 3 is preferably 0.35 mm or less, more preferably 0.25 mm or less, and most preferably 0.20 mm or less. A thickness of the liquid outflow layer 3 equal to or less than 0.35 mm is preferable, because such a distance between the main electrode layer 2 and the ion exchange membrane 30 is not overly large (transfer resistance of ions is not overly large), and therefore can suppress an increase in the cell resistivity. On the other hand, as described above, the lower limit of the thickness of the liquid outflow layer 3 is preferably 0.10 mm or more, and more preferably 0.15 mm or more. A thickness of the liquid outflow layer 3 equal to or greater than 0.10 mm is preferable, because such a thickness can reduce pressure required for the electrolyte to pass through.

The liquid outflow layer 3 is a portion of the configuration of the electrode 10, but the redox reaction of the electrolyte mainly occurs in the main electrode layer 2, and the redox reaction does not need to take place in the liquid outflow layer 3. Additionally, as the liquid outflow layer 3, any layer may be used, provided that the layer has a flow path through which an electrolyte can flow, so that the electrolyte can pass through. A specific embodiment of the liquid outflow layer 3 is not particularly limited, and any embodiment is acceptable in which the permeability of the liquid outflow layer 3 and the permeability of the main electrode layer 2 satisfy the above-mentioned relation. The liquid outflow layer 3 may be constructed of a porous structure which is the same as the porous structure of which the liquid inflow layer 1 is constructed or may be constructed of a porous structure that differs from the porous structure of the liquid inflow layer 1.

[Current collector plate]

The current collector plate 20 serves as a current collector that transfers electrons to and from the electrode 10. The current collector plate 20 usually has a plate-like shape, and any known current collector plate can be used. For example, a carbon-containing conductive material can be used as a material. Specifically, a conductive plastic made of graphite and a thermoplastic resin such as polyolefin, or a conductive plastic made of graphite and a thermosetting resin such as an epoxy resin can be mentioned. Among these, it is preferable to use a molding material obtained by kneading and molding graphite and a thermoplastic resin, considering that such a material can be press-molded into a plate-like shape. In addition, carbon black having high conductivity, such as acetylene black, may be mixed.

[Ion exchange membrane]

The ion-exchange membrane 30 is a membrane through which protons ($H^+$) as charge carriers pass, but other ions do not pass. As the ion exchange membrane, a known cation exchange membrane can be used. Specific examples include a perfluorocarbon polymer having a sulfonic acid group, a hydrocarbon-based polymer compound having a sulfonic acid group, a polymer compound doped with an inorganic acid such as phosphoric acid, an organic/inorganic hybrid polymer partially substituted with a functional group having proton conductivity, a proton conductor comprising a polymer matrix impregnated with phosphoric acid solution or a sulfuric acid solution, and the like. Among these, the perfluorocarbon polymer having a sulfonic acid group is preferable, and Nafion® is more preferable.

With regard to the electrode of the redox flow battery according to the first embodiment, even when a main electrode layer 2 which is poor in liquid permeability for an electrolyte is used, thicknesses of the liquid inflow layer 1 and the liquid outflow layer 3 are optimized, so that the electrolyte that has flowed in spreads uniformly over the entire main electrode layer 2, and the electrolyte after the electrode reactions can be quickly flowed out to the exterior of the electrode 10. In addition, a reduced distance between the main electrode layer 2 and the ion exchange membrane 30 facilitates ion exchange, and this results in suppression of an increase in the cell resistivity, and thereby cell characteristics can be improved.

<Second Embodiment>

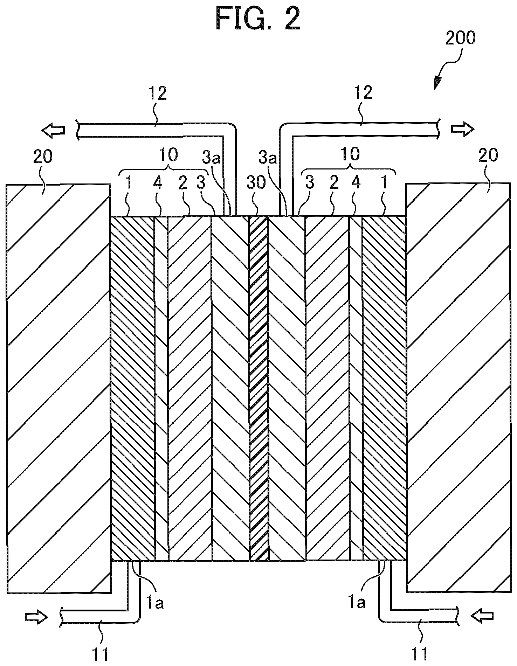

FIG. 2 is a cross-sectional view schematically showing the main configuration of the redox flow battery as described in the second embodiment. Note that in the drawings below, configuration members identical to the members described above will be assigned the same reference numerals, and description thereof is omitted.

As shown in FIG. 2, the electrode 10 of the redox flow battery 200 according to the second embodiment further includes a rectifying layer 4 between the liquid inflow layer 1 and the main electrode layer 2. In this rectifying layer 4, Darcy's law permeability in the thickness direction of the rectifying layer 4 (hereinafter, sometimes simply referred to as "permeability of rectifying layer 4") is preferably smaller than the permeability in the plane direction of the liquid inflow layer 1, and more preferably, greater than the permeability in the thickness direction of the main electrode layer 2. The Darcy's law permeability in the thickness direction of the rectifying layer 4 is preferably 0.2 to 0.5 times the permeability in the plane direction of the liquid inflow layer 1, more preferably 0.4 to 0.8 times the permeability of the liquid inflow layer 1, and most preferably 0.6 to 1.0 time. With regard to combination of the liquid inflow layer 1, the rectifying layer 4 and the main electrode layer 2, the magnitudes of their permeabilities only need to be in the order of: the liquid inflow layer 1 (plane direction) > the rectifying layer 4 (thickness direction) > the main electrode layer 2 (thickness direction). The relationship of the permeabilities of the liquid inflow layer 1, the rectifying layer 4 and the main electrode layer 2 is selected considering the cell resistivity and the pressure loss. Additionally, the Darcy's law permeability in the thickness of the rectifying layer 4 is preferable 500 times or less, and more preferably 200 times or less, with respect to the permeability of the main electrode layer 2.

Installation of a rectifying layer 4 with a lower permeability compared to the permeability of the liquid inflow layer 1 enables an electrolyte having passed through the liquid inflow layer 1 to spread over the entire plane of the rectifying layer 4 before passing through the main electrode layer 2 with a lower permeability, and this results in a more uniform velocity distribution in the plane direction of the liquid inflow layer 1. Thus, the flow of an electrolyte passing through the main electrode layer 2 is oriented perpendicular to the plane of the main electrode layer 2 and is more uniform in the plane of the main electrode layer 2, compared to a case without a rectifying layer 4. As a result, in the main electrode layer 2, reactive species can be simultaneously and efficiently exchanged in a more reliable manner in the charging and discharging process, and this results in reduced cell resistivity and improved charging and discharging capacity.

Incidentally, the thickness of the rectifying layer 4 is preferably smaller than the thickness of the liquid inflow layer 1. The thickness of the rectifying layer 4 is preferably 0.10 mm or more, and more preferably 0.15 mm or more, from the viewpoint of homogenizing the electrolyte in the rectifying layer 4. On the other hand, the upper limit of the thickness of the rectifying layer 4 is preferably 0.30 mm or less, and more preferably 0.25 mm or less from the point of avoiding the cell from being overly thick.

<Third Embodiment>

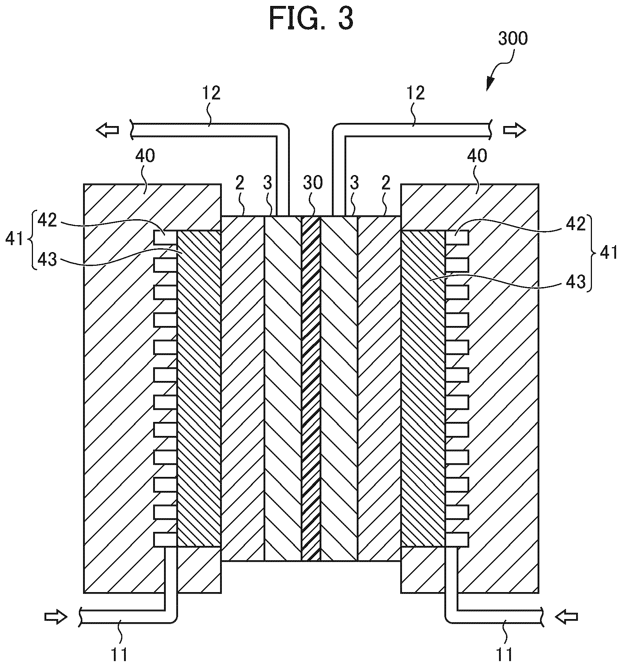

FIG. 3 is a drawing schematically showing a cross section of the main configuration of the redox flow battery according to the third embodiment.

In the redox flow battery 300 according to the third embodiment, a current collector plate 40 and a liquid inflow portion 41 are integrated. The liquid inflow portion 41 is formed in a recess in the current collector plate 40, and comprises flow paths 42, which are composed of partitioned spaces, and a liquid inflow layer 43 comprising a conductive porous structure. Embedding the liquid inflow layer 43 in a recess formed in the current collector plate 40 and integrating it with the current collector plate 40 is advantageous in that thickness of a single cell of a redox flow battery can be reduced. Further, forming the flow path 42 in the liquid inflow portion 41 enables the electrolyte to be guided in any direction, and this results in more reliable suppression of the variation in the plane of an inflow amount of the electrolyte into the liquid inflow layer 43.

Incidentally, the flow path 42 is not particularly limited, and, for example, as shown in FIG. 3, the flow path 42 may be formed by forming grooves in a rib-like shape in the recess of the current collector plate 40 to partition space. Further, the flow path may be formed partitioning space by providing an inlet in the center of the recess of the current collector plate 40 and forming grooves to branch a plurality of the flow paths from the center of the recess, or forming grooves so that the flow paths spread radially. Convex portions formed in this way by defining flow paths with grooves can also serve as a support for the liquid inflow layer 43.

EXAMPLES

Below, examples of the present invention are described. Note that the present invention is not limited to the following examples.

[Example 1]

(Manufacture of main electrode layer)

A mixed liquid was prepared in the following manner: a first carbon nanotubes having an average fiber diameter of 150 nm and an average fiber length of 15 $\mu$m and a second carbon nanotubes having an average fiber diameter of 15 nm and an average fiber length of 3 $\mu$m were mixed in pure water in a content of 90 mass% of the first carbon nanotubes and 10 mass% of the second carbon nanotubes with respect to a total of 100 mass% of the first carbon nanotubes and the second carbon nanotubes; then 1 part of polyisothianaphtene sulfonic acid, which is a water-soluble conductive polymer, was added to 100 parts by mass of the first carbon nanotubes and the second carbon nanotubes in total. The resulting mixed liquid was treated with a wet jet mill to obtain dispersion of carbon nanotubes. To this dispersion, carbon fibers (average fiber diameter 7 $\mu$m, average fiber length 0.13 mm) were further added in a ratio of 50 parts by weight of the carbon fibers with respect to a total of 100 parts by weight of the first and second carbon nanotubes. The resulting mixture was stirred and dispersed by magnetic stirrer. This dispersion was filtered on a filter paper, dehydrated together with the filter paper, and then compressed by press machine and further dried to prepare the main electrode layer 2 containing carbon nanotubes. The average thickness of the main electrode layer 2 was 0.4 mm. The permeability in the thickness direction of the main electrode layer 2 was $2.7 \times 10^{-13}$ m$^2$. Incidentally, the permeability of the main electrode layer 2 was evaluated at a length L, which is different from the length in the battery of Example 1, since the differential pressure $\Delta$P is proportional to the length L. Thirty sheets of main electrode layer 2 manufactured were stacked, 60 mesh Ni mesh sheets made of Ni wires having a diameter of $\varphi$ 0.10 mm were arranged on both sides and compressed, so as to have a total thickness of 1 cm. The obtained stack was placed in a permeability measuring cell having a cross-sectional area of 1.35 cm$^2$ (50 mm wide by 2.7 mm high) and a length of 1 cm, whereby the permeability of the main electrode layer 2 was measured. That is, water (20°C, viscosity = 1.002 mPa·sec) was passed through the permeability measurement cell at a permeation flux of 0.5 cm/sec, the differential pressure by the stacked conductive sheet (outlet pressure-inlet pressure) was measured and the permeability was calculated.

(Manufacture of current collector plate and liquid inflow portion)

As shown in FIG. 3, rib-like grooves were formed as flow paths 42 of the liquid inflow portion 41 in the recess of the current collector plate 40 made of carbon plastic molded body, and a carbon fiber paper (TGP-H-090 produced by Toray Industries Inc. was used in one layer) which is a porous layer and has conductivity was provided as a liquid inflow layer 43. The average thickness of this carbon fiber paper was 0.28 mm, and the permeability in the plane direction in the liquid inflow layer 43 was $8.05 \times 10^{-11}$ m$^2$.

(Liquid outflow layer)

As the liquid outflow layer 3, a carbon fiber paper which is a porous layer and has conductivity (GDL29AA produced by SGL. Co. was used in one layer) was provided. The average thickness of this carbon fiber paper was 0.19 mm, and the permeability in the plane direction in the liquid outflow layer 3 was $4.50 \times 10^{-11}$ m$^2$.

(Battery Assembly)

An electrode was assembled using the main electrode layer 2, the liquid outflow layer 3 and the current collector plate 40 including the liquid inflow portion 41 (flow path 42, liquid inflow layer 43).

Further, using Nafion N212 (registered trademark, produced by DuPont) as the ion exchange membrane 30, a redox flow battery was assembled by disposing two electrodes each having the above-described configuration as a positive electrode and a negative electrode, via a frame, a gasket and a pushing plate (not shown).

Two aliquots, each being 20 mL, of an electrolyte containing vanadium ions ($V^{3+}$, $V^{4+}$) at a concentration of 1.8 M were provided, the two aliquots to be fed into the thus-prepared redox flow battery were placed in a water bath, the bath temperature was set to 25°C, and the respective aliquots were fed into the positive and negative electrodes by a tube pump. The current collector plate closer to the positive electrode and the current collector plate closer to the negative electrode were connected to a power supply, and charging and discharging was performed at room temperature (25°C) at a current density of 80 mA/cm$^2$. The cut-off voltage was 1.75 V for charging and 1.00 V for discharging. In the first cycle, since the valence of a vanadium ion was changed from +5 to +4 in the positive electrode and from +2 to +3 in the negative electrode, the electromotive force was 1.26 V. A calculated cell capacity of 20 ml of 1.8 M electrolyte was approximately 1 Ah. In the second cycle, it was 0.975 Ah. The cell resistivity was calculated using three cycles of charge and discharge curves. The results are shown in Table 1.

[Example 2]

As the liquid inflow layer 43, carbon fiber paper having an average thickness of 0.56 mm and a permeability in the plane direction of $8.05 \times 10^{-11}$ m$^2$ (produced by superimposing two layers of TGP-H-090 produced by Toray Industries Inc.), and as the liquid outflow layer 3, carbon fiber paper having an average thickness of 0.19 mm and a permeability in the plane direction of $4.50 \times 10^{-11}$ m$^2$ (GDL29AA produced by SGL Corporation was used in one layer) were provided. A redox flow battery was assembled in the same manner as in Example 1 except for these, and the cell resistivity was calculated in the same manner as in Example 1. The results are shown in Table 1.

[Example 3]

As the liquid inflow layer 43, carbon fiber paper having an average thickness of 0.56 mm and a permeability in the plane direction of $8.05 \times 10^{-11}$ m$^2$ (manufactured by superimposing two layers of TGP-H-090 produced by Toray Industries Inc.), and as the liquid outflow layer 3, carbon fiber paper having an average thickness of 0.33 mm and a permeability in the plane direction of $1.18 \times 10^{-10}$ m$^2$ (manufactured by superimposing three layers of TGP-H-030 produced by Toray Industries Inc.) were provided. A redox flow battery was assembled in the same manner as in Example 1 except for these, and the cell resistivity was calculated in the same manner as in Example 1. The results are shown in Table 1.

[Example 4]

As the liquid inflow layer 43, carbon fiber paper having an average thickness of 0.37 mm and a permeability in the plane direction of $7.10 \times 10^{-11}$ m$^2$ (TGP-H-120 produced by Toray Industries Inc. was used in one layer), and as the liquid outflow layer 3, carbon fiber paper having an average thickness of 0.11 mm and a permeability in the plane direction of $1.18 \times 10^{-10}$ m$^2$ (TGP-H-030 produced by Toray Industries Inc. was used in one layer) were provided. A redox flow battery was assembled in the same manner as in Example 1 except for these, and the cell resistivity was calculated in the same manner as in Example 1. The results are shown in Table 1.

[Example 5]

As the liquid inflow layer 43, carbon fiber paper having an average thickness of 0.28 mm and a permeability in the plane direction of $8.05 \times 10^{-11}$ m$^2$ (TGP-H-090 produced by Toray Industries Inc. was used in one layer), and as the liquid outflow layer 3, carbon fiber paper having an average thickness of 0.11 mm and a permeability in the plane direction of $1.18 \times 10^{-10}$ m$^2$ (TGP-H-030 produced by Toray Industries Inc. was used in one layer) were provided. Additionally, carbon fiber paper having an average thickness of 0.19 mm and a permeability in the thickness direction of $4.50 \times 10^{-11}$ m$^2$ (GDL29AA manufactured by SGL Corporation was used in one layer) was provided as a rectifying layer 4 to be installed between the liquid inflow layer 1 and the main electrode layer 2. A redox flow battery was assembled in the same manner as in Example 1 except for these, and the cell resistivity was calculated in the same manner as in Example 1. The results are shown in Table 1.

[Comparative Example 1]

As the liquid inflow layer 43, carbon fiber paper having an average thickness of 0.28 mm and a permeability in the plane direction of $8.05 \times 10^{-11}$ m$^2$ (TGP-H-090 manufactured by Toray Industries Inc. was used in one layer), and as the liquid outflow layer 3, carbon fiber paper having an average thickness of 0.33 mm and a permeability in the plane direction of $1.18 \times 10^{-10}$ m$^2$ (manufactured by superimposing TGP-H-030 produced by Toray Industries Inc. in three layers) were provided. A redox flow battery was assembled in the same manner as in Example 1 except for these, and the cell resistivity was calculated in the same manner as in Example 1. The results are shown in Table 1.

[Comparative Example 2]

As the liquid inflow layer 43, carbon fiber paper having an average thickness of 0.28 mm and a permeability in the plane direction of $8.05 \times 10^{-11}$ m$^2$ (TGP-H-090 produced by Toray Industries Inc. was used in one layer), and as the liquid outflow layer 3, carbon fiber paper having an average thickness of 0.44 mm and a permeability in the plane direction of $1.18 \times 10^{-10}$ m$^2$ (manufactured by superimposing TGP-H-030 produced by Toray Industries Inc. in four layers) were prepared. A redox flow battery was assembled in the same manner as in Example 1 except for these, and the cell resistivity was calculated in the same manner as in Example 1. The results are shown in Table 1. Numerical values for the cell resistivity in Table 1 are shown by relative values (exponential ratio) obtained by assuming that the cell resistivity of Comparative Example 1 was 1.00 (reference).

[Table 1]

| | Thickness [mm] | | | Permeability [m$^2$] | | | Ratio of permeabilities | | Cell resistance (relative value) |
|---|---|---|---|---|---|---|---|---|---|
| | Liquid inflow layer | Liquid outflow layer | Rectifying layer | Liquid inflow layer | Liquid outflow layer | Rectifying layer | Liquid inflow layer / main electrode layer | Liquid outflow layer / main electrode layer | |
| Example 1 | 0.28 | 0.19 | - | $8.05 \times 10^{-11}$ | $4.50 \times 10^{-11}$ | - | 298 | 167 | 0.79 |
| Example 2 | 0.56 | 0.19 | - | $8.05 \times 10^{-11}$ | $4.50 \times 10^{-11}$ | - | 298 | 167 | 0.74 |
| Example 3 | 0.56 | 0.33 | - | $8.05 \times 10^{-11}$ | $1.18 \times 10^{-10}$ | - | 298 | 438 | 0.95 |
| Example 4 | 0.37 | 0.11 | - | $7.10 \times 10^{-11}$ | $1.18 \times 10^{-10}$ | - | 263 | 438 | 0.64 |
| Example 5 | 0.28 | 0.11 | 0.19 | $8.05 \times 10^{-11}$ | $1.18 \times 10^{-10}$ | $4.50 \times 10^{-11}$ | 298 | 438 | 0.65 |
| Comparative Example 1 | 0.28 | 0.33 | - | $8.05 \times 10^{-11}$ | $1.18 \times 10^{-10}$ | - | 298 | 438 | 1.00 |
| Comparative Example 2 | 0.28 | 0.44 | - | $8.05 \times 10^{-11}$ | $1.18 \times 10^{-10}$ | - | 298 | 438 | 1.13 |

From the results of Table 1, it can be seen that in Examples 1 to 5, in each of which the thickness of the liquid outflow layer was smaller than that of the liquid inflow layer, the cell resistivities were lower than the cell resistivities in Comparative Examples 1 and 2, in each of which the thickness of the liquid outflow layer was larger than that of the liquid inflow layer. In addition, although the ratios of the permeabilities of the liquid inflow layers to the permeabilities of the main electrode layers were substantially the same in Examples 1 to 3 and Comparative Examples 1 and 2, the cell resistivity tended to be smaller when the thickness of the liquid outflow layer was smaller than that of the liquid inflow layer. Furthermore, in Examples 3 and 4 and Comparative Examples 1 and 2, in which the ratios of the permeabilities of the liquid outflow layers to the permeabilities of the main electrode layers were identical to each other, the cell resistivity also tended to be smaller when the thickness of the liquid outflow layer was smaller than that of the liquid inflow layer. From the above, it can be seen that rendering thickness of a liquid outflow layer smaller than that of a liquid inflow layer achieved reduction in the cell resistivity.

EXPLANATION OF REFERENCE NUMERALS

| | |
|---|---|
| 1 | Liquid inflow layer |
| 2 | Main electrode layer |
| 3 | Liquid outflow layer |
| 4 | Rectifying layer |
| 10 | Electrode |
| 11 | Inflow pipe |
| 12 | Outflow pipe |
| 20 | and 40 Current collector plate |
| 41 | Liquid inflow portion |
| 42 | Flow path |
| 43 | Liquid inflow layer |
| 100, 200 and 300 | Redox flow battery |

**Claims**

1. An electrode of a redox flow battery, with the electrode comprising a liquid inflow layer into which an electrolyte flows; a liquid outflow layer from which the electrolyte flows; and a main electrode layer disposed between the liquid inflow layer and the liquid outflow layer,
wherein thickness of the liquid outflow layer is smaller than thickness of the liquid inflow layer.

2. The electrode of a redox flow battery according to claim 1, wherein the electrode is configured such that the electrolyte passes through the main electrode layer from a plane on the side of the liquid inflow layer to a plane on the side of the liquid outflow layer in a thickness direction of the main electrode.

3. The electrode of a redox flow battery according to claim 1 or 2, wherein Darcy's law permeability in a plane direction of the liquid inflow layer is larger than Darcy's law permeability in the thickness direction of the main electrode layer.

4. The electrode of a redox flow battery according to any one of claims 1 to 3, wherein the main electrode layer comprises a conductive sheet including carbon nanotubes having an average fiber diameter of 1,000 nm or less.

5. The electrode of a redox flow battery according to any one of claims 1 to 4, wherein the liquid inflow layer has a conductivity.

6. The electrode of a redox flow battery according to any one of claims 1 to 5, wherein a thickness of the liquid inflow layer is 0.25 mm or more and 0.60 mm or less.

7. The electrode of a redox flow battery according to any one of claims 1 to 6, wherein the thickness of the liquid outflow layer is 0.10 mm or more and 0.35 mm or less.

8. The electrode of a redox flow battery according to any one of claims 1 to 7, further comprising a rectifying layer between the liquid inflow layer and the main electrode layer,

wherein Darcy's law permeability in the thickness direction of the rectifying layer is smaller than the Darcy's law permeability in the plane direction of the liquid inflow layer.

9. A redox flow battery comprising: an ion exchange membrane, the electrode according to any one of claims 1 to 8, and a current collector plate in this order,
wherein the electrode is arranged such that the liquid inflow layer is on a side of the current collector plate and the liquid outflow layer is on a side of the ion exchange membrane.

# FIG. 1

# FIG. 2

# FIG. 3

<div align="center">

**INTERNATIONAL SEARCH REPORT**

</div>

| | International application No. |
|---|---|
| | PCT/JP2018/046204 |

**A. CLASSIFICATION OF SUBJECT MATTER**

Int.Cl. H01M4/86(2006.01)i, H01M4/96(2006.01)i, H01M8/18(2006.01)i

According to International Patent Classification (IPC) or to both national classification and IPC

**B. FIELDS SEARCHED**

Minimum documentation searched (classification system followed by classification symbols)

Int.Cl. H01M4/86, H01M4/96, H01M8/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2016/159348 A1 (SHOWA DENKO KABUSHIKI KAISHA) 06 October 2016, paragraphs [0037], [0058], [0067] & EP 3279985 A1, paragraphs [0019], [0020], [0052], [0064] & CN 108352534 A | 1-7, 9<br>8 |
| Y<br>A | JP 2001-167785 A (TOYOBO BOSEKI KABUSHIKI KAISHA) 22 June 2001, paragraphs [0018]-[0020], [0022], [0025], [0026], [0029] (Family: none) | 1-7, 9<br>8 |
| A | JP 8-138685 A (KASHIMA SOUTH JOINT POWER CORPORATION) 31 May 1996, paragraphs [0024], [0025], [0028]-[0031] (Family: none) | 1-9 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 February 2019 (28.02.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/046204

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2015-530709 A (THYSSENKRUPP INDUSTRIAL SOLUTIONS AG) 15 October 2015 & US 2015/0236363 A1 & WO 2014/033238 A1 & DE 102012017306 A1 & CA 2833457 A1 & CN 104620432 A & KR 10/2015-0052249 A | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016159348 PCT